Europäisches Patentamt

European Patent Office

Office européen des brevets

(11) Veröffentlichungsnummer: **0 261 632**
**A2**

## (12) EUROPÄISCHE PATENTANMELDUNG

(21) Anmeldenummer: 87113808.7

(22) Anmeldetag: 22.09.87

(51) Int. Cl.⁴: **B23Q 16/00**

Die Bezeichnung der Erfindung wurde geändert (Richtlinien für die Prüfung im EPA, A-III, 7.3).

(30) Priorität: 24.09.86 DE 3632497

(43) Veröffentlichungstag der Anmeldung:
30.03.88 Patentblatt 88/13

(84) Benannte Vertragsstaaten:
AT BE CH DE ES FR GB GR IT LI LU NL SE

(71) Anmelder: **Wallisser, Klaus**
**Hanfwiesenstrasse 17**
**D-7060 Schorndorf(DE)**

(72) Erfinder: **Wallisser, Klaus**
**Hanfwiesenstrasse 17**
**D-7060 Schorndorf(DE)**

(74) Vertreter: **Thul, Leo, Dipl.-Phys. et al**
**Patentanwälte Schuster & Thul**
**Wiederholdstrasse 10**
**D-7000 Stuttgart 1(DE)**

(54) **Längenmessvorrichtung für Werkzeugmaschinen.**

(57) Die Erfindung bezieht sich auf eine Längenmeßvorrichtung, mit der die Arbeitslängen an Fräs-und Sägemaschinen eingestellt werden können. Die Meßvorrichtung besteht aus einer Baueinheit, die einen verschiebbaren Anschlag (1) aufweist, der bei auf dem Arbeitstisch der Werkzeugmaschine aufgesetzter Baueinheit parallel zur Tischebene und senkrecht auf das Werkzeug hin verschiebbar ist. Synchron mit dem Anschlag (1) ist die elektrische Abtastanordnung eines ebenfalls in der Baueinheit vorgesehenen elektrischen Maßstabes verschiebbar, wobei die Abtastanordnung elektrisch mit einem Anzeigegerät verbunden ist.

EP 0 261 632 A2

## Längenmeßvorrichtung für Fräsmaschinen, Sägemaschinen und dergleichen Maschinen

Die Erfindung bezieht sich auf eine Längenmeßvorrichtung für Fräsmaschinen, Sägemaschinen und dergleichen Maschinen, d.h. eine Meßvorrichtung zum Einstellen der Fräs-oder Sägelänge von Werkstücken.

Das manuelle Einstellen von Maschinen der vorstehend genannten Art auf die genauen Bearbeitungsmaße ist meist sehr zeitraubend und vielfach Fehlern unterworfen. Solange Großserien betroffen sind, kann man sich genügend Zeit für die Einstellung lassen und eventuelle Fehler korrigieren, da die Neueinstellung dann immer noch für eine Vielzahl von Bearbeitungsvorgängen gültig und damit rentabel ist. Bei Einzelstücken oder Kleinserien kann dagegen ein Meßfehler einen totalen Verlust bedeuten. Es ist daher wünschenswert, eine Vorrichtung zu schaffen, bei der manuelle Bedienungen und dadurch bedingte Einstell-bzw. Meßfehler möglichst ausgeschlossen sind.

Gegenstand der Erfindung ist daher eine Vorrichtung zum maschinellen Einstellen der Fräs-bzw. Sägemaße an den entsprechenden Werkzeugmaschinen.

Die Erfindung ist gekennzeichnet durch einen auf einer geeigneten Halterung, die auf dem Werkzeugtisch befestigbar ist, parallel zur Tischebene und senkrecht zum Werkzeug hin verschiebbaren Anschlag, sowie einen an der Halterung parallel zur Verschieberichtung des Anschlag angeordneten, elektrisch abtastbaren Maßstab, dessen Abtastvorrichtung synchron und zwangsweise mit dem Anschlag verschiebbar und elektrisch mit einem Anzeigegerät verbunden ist.

Vorteilhafterweise ist der Anschlag an einem Arm befestigt, der seinerseits am dem Anschlag abgekehrten Ende an einem Schieber befestigt ist, wobei der Schieber auf zwei Führungsschienen, die in zwei Endstücken gelagert sind, verschiebbar ruht und wobei durch den Schieber eine zu den Führungsschienen parallele Spindel greift, mittels der der Schieber verschiebbar ist.

Die Spindel kann manuell oder mittels eines Schrittmotors eingestellt werden. Die Nullung und die Längeneinstellung der Maßeinrichtung kann auch computergesteuert sein, so daß die Bedienungsperson nur die entsprechenden Funktionstasten der Computereinrichtung zu betätigen braucht, nachdem die Meßvorrichtung auf dem Arbeitstisch befestigt ist.

Die Vorteile der Erfindung liegen auf der Hand. Anstelle des mühsamen und fehlerbehafteten Einstellens der Maßlängen mittels einer Schieblehre bringt die neue Meßvorrichtung eine schnelle, sichere und genaue Einstellung der Arbeitslängen der zu bearbeitenden Werkstücke. Diese Vorteile gelten auch bei kleinen Stückzahlen, da die Einstellung einer neuen Arbeitslänge problemlos und - schnell durchgeführt werden kann.

Weitere Vorteile und Merkmale der Erfindung ergeben sich aus den Unteransprüchen und der folgenden Beschreibung eines Ausführungsbeispiels.

Es zeigen:

Fig. 1 eine Draufsicht auf die neue Meßvorrichtung

Fig. 2 eine Ansicht der Meßvorrichtung in Richtung des Pfeils A der Fig. 1

Fig. 3 die Ausbildung des Schiebers 3 als Ausrastklinke.

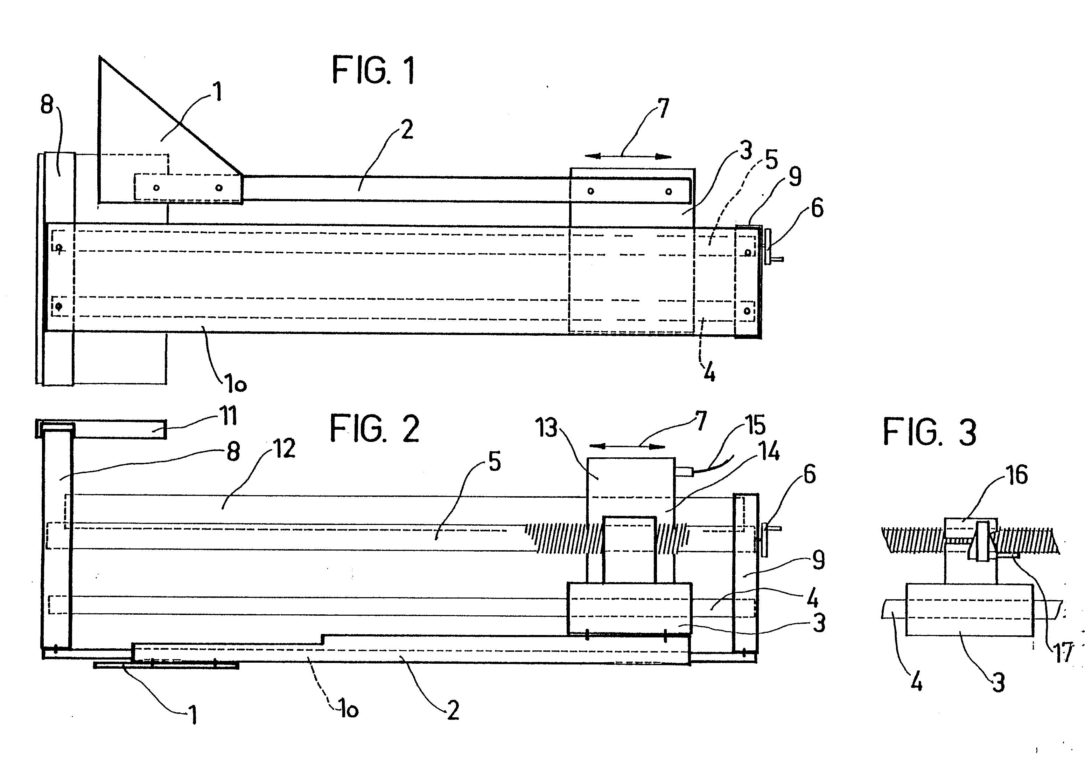

Die Fig. 1 und 2 zeigen die neue Meßvorrichtung in zwei Ansichten. Der für die Meßeinstellung wichtige Anschlag 1 ist an dem Arm 2 befestigt, der seinerseits mit dem Schieber 3 fest verbunden ist. Der Schieber 3 sitzt auf den beiden zu dem Arm 2 parallelen Fuhrungsschienen 4 sowie der parallelen Spindel 5, die über das Handrad 6 manuell verdrehbar ist. Durch Verdrehen der Spindel 5 kann der Schieber 3 in den Richtungen des Doppelpfeils 7 verschoben werden.

Die beiden parallelen Führungsschienen 4 und die Spindel 5 sind in den beiden Endstücken 8 und 9 fest gelagert, die wiederum mittels der Leiste 10 zu einer festen Einheit verbunden sind. An dem linken Endstück 8 ist das Fußstück 11 angelenkt, mittels dem die gesamte Meßvorrichtung an dem Arbeitstisch der Bearbeitungsmaschine befestigt und justiert werden kann.

Im unteren Teil der Meßvorrichtung ist die Längenmeßeinrichtung vorgesehen, die aus dem an sich bekannten Glasmaßstab 12 besteht. Der auf dem Glasmaßstab 12 sitzende Läufer 13 mit dem Abtastorgan ist mittels der Lasche 14 fest mit dem Schieber 3 verbunden, so daß er synchron und zwangsläufig mit dem Meßanschlag 1 verschoben wird. Über das Kabel 15 ist das Abtastorgan mit einem digitalen Anzeigegerät verbunden.

Es sei nun das Einstellen einer neuen Meßlänge für das Fräsen eines Werkstückes beschrieben.

Hierzu wird die Meßvorrichtung auf die Fräsmaschine aufgesetzt und in dieser Position durch entsprechende Mittel wie Nuten, Nutensteine, Schrauben oder dergleichen gehalten und justiert. Über das Kabel 15 wird die Abtastanordnung des Glasmaßstabes 12 mit dem digitalen Anzeigegerät verbunden. Die Meßvorrichtung muß sodann in die definierte Ausgangsposition gebracht, d.h. genullt werden. Hierzu wird der Anschlag 1 durch Verschieben des Arms 2 an den Fräser herangefahren, bis er an diesen anschlägt, und das Anzeigegerät in die Nullstellung gebracht. Nun ist die Meßvorrichtung, die auf dem Arbeitstisch der Werkzeugmaschine verbleibt, arbeitsbereit.

Für einen Fräsvorgang wird der Arm 2 mit dem Anschlag 1 soweit zurückgeschoben, bis das Anzeigegerät die Arbeitslänge anzeigt, und das Werkstück für die Bearbeitung so eingespannt, daß es an dem Anschlag 1 anliegt. Damit können beliebig viele Werkstücke nacheinander bearbeitet werden, ohne daß ein aufwendiges Nachmessen erforderlich ist.

Die Nullung und die Einstellung der Meßvorrichtung kann selbstverständlich anstatt manuell auch mit einem geeigneten Schrittmotor erfolgen. Auch ist es möglich, die Eingaben der Meßwerte computergesteuert vorzunehmen.

Fig. 3 zeigt nun eine spezielle Ausbildung des Schiebers 3. Hierbei ist der Teil des Schiebers 3, durch den die Spindel 5 geführt ist, als Ausrastklinke 16 zum Entriegeln der Gewindeführung ausgebildet. Zum Ausrasten wird der Klinkenhebel 17 in Richtung auf die Führungsschiene 4 gedrückt. Im ausgeklinkten Zustand kann der Schieber 3 und damit der Anschlag 1 grob eingestellt bzw. schnell um größere Längen verschoben werden.

## Ansprüche

1. Längenmeßvorrichtung zum Einstellen der Arbeitslänge an Fräs-oder Sägemaschinen, gekennzeichnet durch einen auf einer geeigneten Halterung, die auf dem Werkzeugtisch befestigbar ist, parallel zur Tischebene senkrecht zum Werkzeug hin verschiebbaren Anschlag (1) sowie einen an der Halterung parallel zu Verschieberichtung des Anschlags (1) angeordneten, elektrisch abtastbaren Maßstab (12), dessen Abtastvorrichtung synchron und zwangsweise mit dem Anschlag (1) verschiebbar und elektrisch mit einem Anzeigegerät verbunden ist.

2. Längenmeßvorrichtung nach Anspruch 1, dadurch gekennzeichnet, daß der Anschlag (1) an einem Arm (2) befestigt ist, der seinerseits am dem Anschlag (1) abgekehrten Ende an einem Schieber (3) befestigt ist, daß der Schieber (3) auf zwei Führungsschienen (4), die in den beiden Endstücken (8 und 9), die über die Leiste (10) fest miteinander verbunden sind, fest gelagert sind, verschiebbar ruht und daß durch den Schieber (3) eine zu den Führungsschienen (4) parallele Spindel (5) greift, mittels der der Schieber (3) verschiebbar ist, und daß der Läufer (13) des Maßstabes (12) über die Lasche (14) fest mit dem Schieber (3) verbunden ist.

3. Längenmeßvorrichtung nach Anspruch 1 und 2, dadurch gekennzeichnet, daß die Spindel (3) über das Handrad (6) manuell betätigbar ist.

4. Längenmeßvorrichtung nach Anspruch 1 und 2, dadurch gekennezeichnet, daß die Spindel (3) mittels eines Schrittmotors betätigbar ist.

5. Längenmeßvorrichtung nach Anspruch 1 und 2, dadurch gekennzeichnet, daß der Teil des Schiebers (3), durch den die Spindel (5) greift, als Ausrastklinke (16) ausgebildet ist.

6. Längenmeßvorrichtung nach Anspruch 1 bis 5, dadurch gekennzeichnet, daß an dem Endstück (8) ein Fußteil (11) zum Befestigen der Meßvorrichtung an dem Werkzeugtisch vorgesehen ist.

FIG. 1

FIG. 2

FIG. 3

0 261 632